Europäisches Patentamt

European Patent Office

Office européen des brevets

(11) Veröffentlichungsnummer : **0 117 554**
**B1**

(12) **EUROPÄISCHE PATENTSCHRIFT**

(45) Veröffentlichungstag der Patentschrift :
28.05.86

(21) Anmeldenummer : 84101980.5

(22) Anmeldetag : 24.02.84

(51) Int. Cl.⁴ : **F 24 J 3/00**, F 28 G 1/16,
F 28 D 3/04

(54) Wärmepumpe zum Entnehmen von Wärme aus Oberflächewasser.

(30) Priorität : 26.02.83 DE 3306865

(43) Veröffentlichungstag der Anmeldung :
05.09.84 Patentblatt 84/36

(45) Bekanntmachung des Hinweises auf die Patenterteilung : 28.05.86 Patentblatt 86/22

(84) Benannte Vertragsstaaten :
AT CH DE GB LI NL

(56) Entgegenhaltungen :
EP-A- 0 042 795
CH-A- 237 313
DE-A- 2 837 892
DE-A- 3 147 378
DE-C- 461 944
DE-C- 681 318
FR-A- 2 090 599
GB-A- 652 215
US-A- 3 610 417
US-A- 4 187 690
US-A- 4 201 262

(73) Patentinhaber : **Johs. Burmester & Co. GmbH**
**Sandstrasse 31**
**D-2054 Geesthacht (DE)**

(72) Erfinder : **Klüe, Ulrich, Dipl.-Ing.**
**Richtweg 95 a**
**D-2054 Geesthacht (DE)**

(74) Vertreter : **Dipl.-Ing. H. Hauck Dipl.-Phys. W. Schmitz**
**Dipl.-Ing. E. Graalfs Dipl.-Ing. W. Wehnert Dr.-Ing. W.**
**Döring**
**Neuer Wall 41**
**D-2000 Hamburg 36 (DE)**

## Beschreibung

Die Erfindung betrifft eine Wärmepumpe zum Entnehmen von Wärme aus Oberflächenwasser, mit wenigstens einem von einem Kältemittel durchströmbaren Verdampfer, einer Aufgabeeinrichtung zum Aufgeben eines von einer Wasser-Fördereinrichtung gelieferten Stromes des Wassers von oben auf den Verdampfer zwecks Wärmeaustausch zwischen dem Verdampfer und dem an ihm herunterlaufenden Wasser, einer Wasser-Ableiteinrichtung zum Ableiten heruntergelaufenen Wassers, einem Kältemittelkreislauf zum Überführen von Wärme aus dem herunterlaufenden Wasser zu einem Verbraucher von im Vergleich zu dem Wasser höherer Temperatur und einer Regeleinrichtung mit einem den Betriebszustand erfassenden Temperaturfühler.

Eine derartige Wärmepumpe gehört zum internen Stand der Technik der Anmelderin.

Wärmepumpen der beschriebenen Art können wirkungsvoll nur mit flüssigem Wasser betrieben werden. Man muß deshalb die Wärmeentnahme so regeln, daß die Ablauftemperatur des von dem Verdampfer ablaufenden Wassers noch um einen Sicherheitsabstand oberhalb der Gefriertemperatur des Wassers liegt. Je kleiner dieser Sicherheitsabstand ist, desto größer ist die mit der betreffenden Wärmepumpe aus dem gegebenen Wasser entnehmbare Wärmemenge ; das gilt ganz besonders dann, wenn das zur Verfügung stehende Wasser bereits eine verhältnismäßig niedrige Temperatur hat, wie es in den gemäßigten geografischen Breiten insbesondere im Spätherbst und Winter sehr häufig der Fall ist. Geht man mit der Ablauftemperatur des Wassers zu nahe an den Gefrierpunkt, so besteht die Gefahr, daß schon geringfügige Ungleichmäßigkeiten im Aufbau in der Arbeitsweise der Wärmepumpe zu einer teilweisen oder völligen Vereisung des Verdampfers führen. Dadurch wird die entnehmbare Wärmemenge sehr stark herabgesetzt. Die Beseitigung der Vereisung ist umständlich und zeitaufwendig ; überdies kann der Verdampfer durch die Vereisung beschädigt oder sogar zerstört werden.

Aus den genannten Gründen darf bei bekannten Wärmepumpen der beschriebenen Art zur Entnahme von Wärme aus Oberflächenwasser die Ablauftemperatur des Wassers nicht unter etwa 4°C liegen, und schon dafür ist ein kaum noch tragbarer Aufwand an Meß- und Regeleinrichtungen erforderlich.

Die Erfindung geht von der Aufgabe aus, eine Wärmepumpe zum Entnehmen von Wärme aus Oberflächenwasser zu schaffen, die bei hoher Betriebssicherheit mit einer sehr niedrigen Ablauftemperatur dicht über dem Gefrierpunkt betrieben werden kann und nur einen geringen Aufwand an Meß- une Regeleinrichtungen aufweist.

Nach der Errfindung wird diese Aufgabe gelöst mit einer Wärmepumpe der eingangs angegebenen Art, die dadurch gekennzeichnet ist, daß zur Bildung eines gleichmäßigen Wasserfilms der Verdampfer aus einer Anzahl von aufrechtstehenden Verdampferplatten besteht, die Wasser-Abgabeeinrichtung eine oberhalb der Verdampferplatten angeordnete Rieselwanne mit mehreren zur gleichmäßigen Beaufschlagung der Verdampferplatten bemessenen und verteilten Abgabeöffnungen aufweist, Verteilungsmittel die Verdampferplatten zum gleichmäßigen Verteilen des inneren Kältemittelstromes und des äußeren Wasserfilms aufweisen, daß bei Dauerbetrieb zur Vermeidung einer Eisbildung an den Verdampferplatten die Regeleinrichtung von dem Temperaturfühler auf die Einhaltung einer dicht über dem Gefrierpunkt liegenden Temperatur des Wasserfilms steuerbar ist, und daß eine Reinigungseinrichtung für die Oberflächen der Verdampferplatten vorgesehen ist, die eine wahlweise betätigbare Aneisungseinrichtung zum vorübergehenden Aneisen und anschließenden Abtauen der Verdampferplatte aufweist.

Bei der erfindungsgemäßen Wärmepumpe kann auf den aufrechtstehenden Verdampferplatten ein sehr gleichmäßiger Wasserfilm auch aus rasch strömendem Wasser erzeugt werden, vorzugsweise auf beiden Seiten der Platte, und Verluste und Ungleichförmigkeiten durch reflektierte oder beiseite spritzende Anteile des Wasserstromes können praktisch vollständig vermieden werden. Die Verteilungsmittel stellen sicher, daß die Temperatur über die ganze Fläche der Verdampferplatte und des darauf befindlichen Wasserfilms weitgehend einheitlich ist. Die mit einer Aneisungseinrichtung arbeitende Reinigungseinrichtung für die Verdampferplatten kann sehr einfach aufgebaut sein, da man dazu nur geringfügige Eingriffe in den Kältemittelkreislauf vorzunehmen braucht. Es hat sich gezeigt, daß durch das Aneisen und Abtauen eine sehr wirksame Reinigung der Verdampferplatte möglich ist. Auch ist der Aneisungs- und Abtauvorgang sehr leicht zu automatisieren, und es kann damit in einfacher Weise sichergestellt werden, daß der Wärmeleitungswiderstand zwischen den Verdampferplatten und dem Wasser über lange Zeiten unverändert bleibt und insbesondere nicht durch Ablagerungen verändert wird. Besonders vorteilhaft ist dabei auch, daß der Durchfluß von Verunreinigungen nicht behindert wird ; dadurch ist die erfindungsgemäße Reinigungseinrichtung einer vorgeschalteten Filtrationseinrichtung grundsätzlich stark überlegen.

Die erfindungsgemäßen Maßnahmen bewirken insgesamt, daß im Dauerbetrieb die Ablauftemperatur ohne Gefahr einer Vereisung bis sehr nahe an den Gefrierpunkt des Wassers abgesenkt werden kann. Da im Herbst und im Winter sehr häufig die Temperaturen von Oberflächenwasser nur einige °C betragen, kann die erfindungsgemäße Wärmepumpe noch Wärme liefern, wenn andere Wärmepumpen mit höherem Sicherheitsabstand zwischen Ablauftemperatur und Gefriertemperatur bereits nicht mehr betriebsfähig sind. Bei höheren Temperaturen des zugeführten Wassers kann die erfindungsgemäße Wärmepumpe eine erheblich größere Wärmemenge entnehmen. Wenn beispielsweise das zulaufende Wasser eine Temperatur von 6 °C hat, kann bei einer Ablauftemperatur von 2 °C, wie sie bei der erfindungsgemäßen Wärmepumpe ohne weiteres möglich ist, die doppelte Wärmemenge entnommen werden wie bei einer Ablauftemperatur von 4 °C. Bei der erfindungsgemäßen Wärmepumpe kann die Ablauftemperatur im Normalfall bis auf etwa 0,5 °C gesenkt werden. Bei bekannten Wärmepumpen mit Rohrbündel-Verdampfern darf die mittlere Ablauftemperatur nicht tiefer als etwa 4...3 °C liegen. In den gemäßigten Breiten liegen im Herbst und im Winter oft Temperaturen des Oberflächenwassers vor, bei denen zwar noch die erfindungsgemäße Wärmepumpe, nicht aber Wärmepumpen mit höherer mittlerer Ablauftemperatur betrieben werden können. Die erfindungsgemäße Wärmepumpe ermöglicht deshalb hohe Einsparungen an kostspieliger Ersatz-Wärmeenergie, z. B. elektrischem Strom oder Öl.

Einzelne der erfindungsgemäß kombinierten Merkmale sind an sich bekannt, so die Rieselwanne bei einem Dampf-Kondensator (DE-A-2 837 892) oder einem industriellen Schlangenkühler, bei dem auch eine möglichst tiefe Ablauftemperatur als erstrebenswert beschrieben wurde (US-A 4 201 262). Insbesondere ist es schon bekannt, bei einer Wärmepumpe zur Wärmeaufnahme aus Oberflächengewässer einen Plattenverdampfer zu verwenden (DE-A1-2 637 784); dabei soll jedoch die Erstarrungswärme des Wassers mit genutzt, also die Wassertemperatur gewollt bis zum Gefrierpunkt abgesenkt und der Verdampfer zeitweilig mit einem Eismantel betrieben werden. Abgesehen davon, daß bei einer solchen Arbeitsweise aufwendige zusätzliche Maßnahmen erforderlich sind (eine konkrete Gestaltung ist in der genannten Schrift nicht beschrieben), treten dabei wie auch in den weiter vorn genannten Schriften die hier behandelten Probleme, insbesondere die Einhaltung eines Betriebes möglichst nahe über, aber nicht an oder unter dem Gefrierpunkt, überhaupt nicht in Erscheinung. Das gleiche gilt auch für eine andere bekannte Wärmepumpe (EP-A-0 042 795), bei der als Verdampfer ein Plattenverdampfer vorgesehen ist. Auch bei dieser bekannten Wärmepumpe wird die Bildung von Eis am Verdampfer herbeigeführt, um die Erstarrungswärme des Wassers nutzbar zu machen. Diese bekannte Pumpe ist aber auch deshalb gattungsfremd, weil dort das Wasser nur in einem Vorrat vorliegt und nur als Wärmepuffer zwischen eine andere Wärmequelle, insbesondere einen Solarkollektor, und den Verbraucher geschaltet ist. Es handelt sich also nicht um das Entnehmen von Wärme aus Oberflächenwasser; dabei ist ein Betrieb mit Eisbildung grundsätzlich unerwünscht. Im übrigen ist weder in der DE-A1-2 637 784 noch in der EP-A 0 042 795 angedeutet, daß die Ausführung des Verdampfers aus einer Anzahl von aufrechtstehenden Verdampferplatten für eine spezielle andere Wärmepumpe bedeutungsvoll sein könnte. In gleicher Weise fehlt auch bei beiden Schriften jeder Hinweis darauf, daß und warum ein Aneisen und Abtauen des Verdampfers auch bei Wärmepumpen zweckmäßig sein könnte, bei denen man auf die Vermeidung einer Eisbildung am Verdampfer abzielt.

Vorzugsweise ist bei der erfindungsgemäßen Wärmepumpe eine wahlweise betätigbare Reinigungseinrichtung für die Abgabeöffnungen der Rieselwanne vorgesehen. Durch diese Reingigungseinrichtung ist sichergestellt, daß die gleichmäßige Verteilung des Wassers in einfachster Weise über lange Zeiten unverändert gehalten werden kann, und zwar auch bei Verwendung verunreinigten Oberflächenwassers.

Die Reinigungseinrichtung für die Abgabeöffnungen der Rieselwanne enthält vorzugsweise eine wahlweise betätigbare Spritzeinrichtung zum Reinigen der Abgabeöffnungen. Die dadurch ermöglichte Reinigung der Abgabeöffnungen durch Spritzen ist außerordentlich wirksam, erfordert nur eine sehr kurze Zeit und kann leicht automatisiert werden, so daß ein gleichmäßiger Wasserfilm über sehr lange Betriebszeiten automatisch und mit einfachsten Mitteln aufrechterhalten werden kann.

Die Erfindung wird im folgenden anhand von Ausführungsbeispielen in Verbindung mit den Zeichnungen näher erläutert. Es zeigt:

Figur 1 eine schematische Vertikalschnitt-Darstellung nach der Linie I-I der Fig. 2 einer erfindungsgemäßen Wärmepumpe im Betrieb;

Figur 2 eine schematische Vertikalschnitt-Darstellung nach der Linie II-II der Fig. 1, wobei die Wärmepumpe vor der Inbetriebnahme dargestellt ist; und

Figur 3 eine abgewandelte Ausführungsform einer Rieselwanne in der Darstellung wie in Fig. 1.

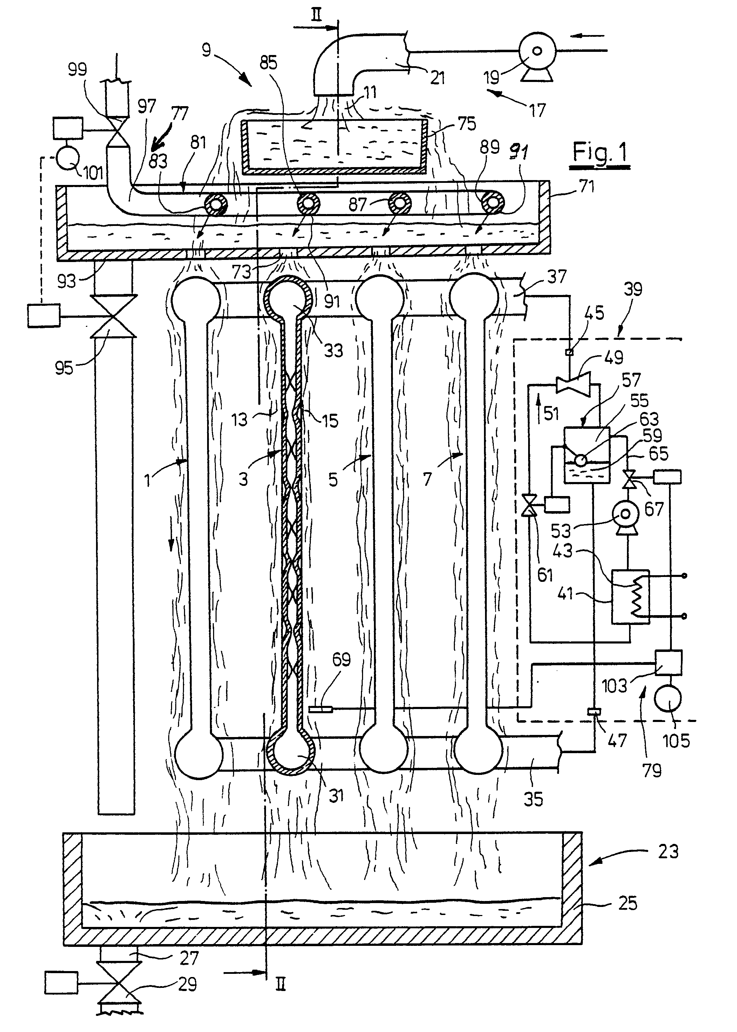

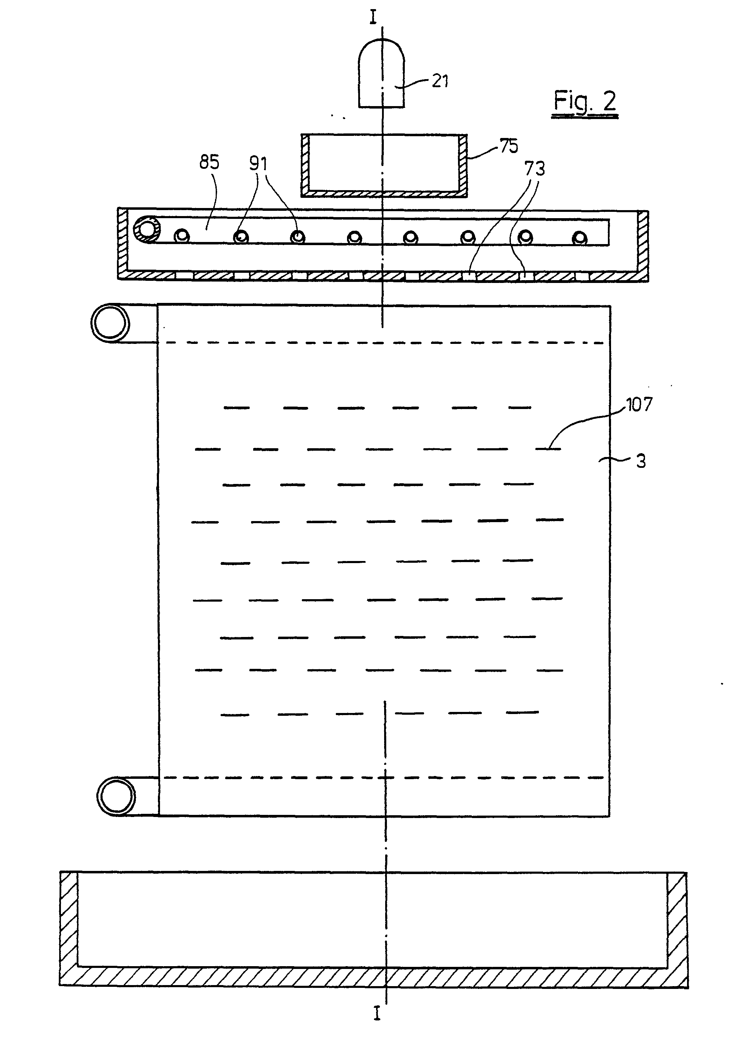

Die Fig. 1 und 2 zeigen eine Wärmepumpe mit mehreren aufrechtstehenden Verdampferplatten 1, 3, 5, 7 und einer Aufgabeeinrichtung 9 zum Aufgeben eines von einer Wasser-Fördereinrichtung gelieferten Wasserstromes 11 von oben auf die Verdampferplatten derart, daß sich auf beiden Seiten der Platten jeweils ein Wasserfilm herunterlaufenden Wassers bildet, so z. B. bei der Platte 3 die Wasserfilme 13 und 15. Der Wasserstrom 11 wird von einer Wasser-Fördereinrichtung 17 geliefert, die hier eine Pumpe 19 konstanter Förderleistung und ein Zufuhrrohr 21 aufweist. In Fig. 1 ist nur die Verdampferplatte 3 im Schnitt dargestellt. Das an den Platten heruntergelaufene Wasser wird von einer Wasser-Ableiteinrichtung 23 abgeleitet. Diese hat bei der dargestellten Ausführungsform eine Wanne 25 mit einem Ablauf 27, in welchem ein steuerbares Ventil 29 vorgesehen ist. Das Ventil 29 ist in dem dargestellten normalen Betriebszustand offen. Die Verdampferplatten 1, 3, 5, 7 werden von einem Kältemittel von unten nach oben durchströmt. Jede Verdampferplatte hat unten einen über die ganze Breite der Platte gehenden Kältemittel-Einlaßkanal, z. B. die Platte 3 den Einlaßkanal 31, und oben einen über die ganze Breite der Platte gehenden Kältemittel-Auslaßkanal, z. B. die Platte 3 den Auslaßkanal 33. Die Einlaßkanäle sind an eine Kältemittel-Einlaßleitung 35, und die Auslaßkanäle sind an eine Kältemittel-Auslaßleitung 37 angeschlossen. Diese Leitungen sind an ein außerhalb des Rieselbereichs angeordnetes Kälteaggregat 39 angeschlossen, das in üblicher Weise aufgebaut sein kann und einen Wärmetauscher 41 aufweist, in welchem an einen Verbraucher 43 Wärme abgegeben werden kann. Das Kälteaggregat 39 bildet mit den Verdampferplatten 1, 3, 5, 7 einen Kältemittelkreislauf, in welchem Wärme aus dem an den Platten herunterlaufenden Wasser entnommen, auf höhere Temperatur gebracht und in dem Wärmetauscher 41 an den Verbraucher 43 abgegeben wird. Bei der dargestellten Ausführungsform enthält das Kälteaggregat einen an die Kältemittel-Auslaßleitung 37 angeschlossenen Rücklaufanschluß 45 und einen an die Kältemittel-Einlaßleitung 35 angeschlossenen Vorlaufanschluß 47. Der Rücklaufanschluß 45 führt zum Ansaugstutzen eines Ejektors 49, der von einem Kältemittel-Strom 51 betrieben wird. Dieser Kältemittelstrom 51 wird von einem Kältemittel-Verdichter 53 aufrechterhalten. Der Verdichter 53 fördert über den Wärmeaustauscher 41 das flüssige Kältemittel über ein regelbares Ventil 61 als Treibmittelstrom in den Ejektor 49. Das Ventil 61 wird von einem Schwimmer 63 eines Abscheiders 57 gesteuert. Aus dem Ejektor 49 tritt der Kältemittelstrom teils in gasförmiger, teils in flüssiger Form in den Dampfraum 55 des Abscheiders 57 ein. Dieser Dampfraum ist ferner an die Ansaugseite des Verdichters 53 angeschlossen. An den Flüssigkeitsraum 59 des Abscheiders 57 ist die Kältemittel-Einlaßleitung 35 angeschlossen. Ferner ist in der vom Abscheider 57 zu dem Verdichter 53 führenden Saugleitung 65 ein Regelventil 67 vorgesehen. Dieses wird von einem in dem ablaufenden Wasser angeordneten Temperaturfühler 69 so gesteuert, daß die Temperatur des ablaufenden Wassers einen gewünschten Wert, z. B. 0,5 °C, annimmt und beibehält.

Die Wasser-Aufgabeeinrichtung 9 enthält eine Rieselwanne 71, die oberhalb der Verdampferplatten 1, 3, 5, 7 angeordnet ist und für jede Platte mehrere über die Breite der Platte verteilte Abgabeöffnungen 73 aufweist. Diese Abgabeöffnungen 73 sind derart bemessen und verteilt, daß sich die gleichmäßigen Wasserfilme, z. B. die Filme 13 und 15 bei der Platte 3, auf beiden Seiten der Verdampferplatten bilden können. Oberhalb der Rieselwanne 71 ist eine Beruhigungsrinne 75 angeordnet, in die der Wasserstrom 11 eingeleitet wird. Aus der Beruhigungsrinne 75 wird die Rieselwanne 71 durch Überlauf gespeist.

Die Abgabeöffnungen 73 der Rieselwanne 71 und die Oberflächen der Verdampferplatten 1, 3, 5, 7 können mittels wahlweise betätigbarer Reinigungseinrichtungen 77 bzw. 79 gereinigt werden.

Die Reinigungseinrichtung 77 für die Abgabeöffnungen 73 enthält bei der dargestellten Ausführungsform eine wahlweise betätigbare Spritzeinrichtung 81, die oberhalb der Abgabeöffnungen 73 angeordnet ist. Mit einer solchen Spritzeinrichtung kann leicht eine sehr intensive Reinigungswirkung ausgeübt und der losgespritzte Schmutz weggeschwemmt werden. Bei der dargestellten Ausführungsform enthält die Spritzeinrichtung 81 je eine Druckwasserleitung 83, 85, 87, 89 für die Verdampferplatten. In den Druckwasserleitungen sind Spritzöffnungen 91 vorgesehen, die auf die ihr zugeordneten Abgabeöffnungen 73 gerichtet sind. Dadurch werden beim Reinigen gezielt die Abgabeöffnungen getroffen. Jede Reihe von Abgabeöffnungen 73 hat somit eine ihr zugeordnete Reihe von Spritzöffnungen 91.

Damit die bei dem Reinigungsvorgang anfallenden Wasser- und Schmutzmengen einfach weggeschwemmt werden können, hat die Rieselwanne 71 in einem Endbereich einen Spritzwasser-Ablauf 93 von großem Querschnitt. Darin ist ein steuerbares Ventil 95 vorgesehen, das während des Betriebes der Spritzeinrichtung 81 geöffnet wird. Bei der dargestellten Ausführungsform wird das aus dem Spritzwasser-Ablauf 93 kommende Gemisch von Wasser, Spritzwasser und Schmutz mit dem von den Verdampferplatten herabgelaufenen Wasser in der Wanne 25 vereinigt. Natürlich kann statt dessen auch eine Ableitung zu anderen Bereichen hin erfolgen.

Um den losgespritzten Schmutz bevorzugt zu dem Spritzwasser-Ablauf 93 hin zu befördern, sind die Spritzöffnungen 91 mit einer zu dem Spritzwasser-Ablauf 93 hinweisenden schrägen Spritzrichtung angeordnet. Die Druckwasserleitungen 83, 85, 87, 89 sind an eine Druckwasserquelle, hier in Form einer Druckwasserleitung 97, angeschlossen, die über ein steuerbares Ventil 99 absperrbar ist.

Bei der dargestellten Ausführungsform wird die Reinigungseinrichtung 77 in vorgegebenen Zeitabständen von z. B. 3 Stunden automatisch für eine kurze Zeitspanne, z. B. 15 Sekunden, betätigt. Im Falle der dargestellten Verwendung einer Spritzeinrichtung 81 erfolgt dies dadurch, daß unter Steuerung durch eine Schaltuhr 101 die Ventile 95 und 99 geöffnet werden. Durch diese automatische Reinigung sind Wartungsarbeiten an der Aufgabeeinrichtung 9 nur noch in großen Zeitabständen oder sogar überhaupt nicht mehr nötig.

Bei der dargestellten Ausführungsform ist der gesamte Querschnitt der Ablauföffnungen 73 in der Rieselwanne 71 derart auf den von der Pumpe 19 bestimmten Durchfluß des Wasserstromes 11 abgestimmt, daß sich in der Rieselwanne 71 ein bestimmter mittlerer Pegel einstellt. Man kann aber natürlich auch die Rieselwanne mit Überlauf betreiben und dadurch einen konstanten Wasserdruck an den Ablauföffnungen 73 sicherstellen. Dabei würde jedoch das überlaufende Wasser nicht zur Wärmegewinnung genutzt werden. Gerade bei den hier besonders ins Auge gefaßten Betriebszuständen bei niedrigen Wassertemperaturen ist ein solcher Verlust aber unerwünscht. In jedem Fall ist es vorteilhaft, wenn die Rieselwanne 71 leicht auswechselbar angeordnet und gegen wenigstens eine andere Rieselwanne mit anderen Größen der Ablauföffnungen 73 austauschbar ist. Man kann dann bequem die Wärmepumpe auf andere Anforderungen, z. B. einen größeren oder kleineren Wasserstrom 11, umstellen.

Die Reinigungseinrichtung 79 für die Verdampferplatten 1, 3, 5, 7 weist eine wahlweise betätigbare Aneisungseinrichtung 103 auf, mit der die Verdampferplatten 1, 3, 5, 7 vorübergehend mit einer Eisschicht überzogen und anschließend wieder durch Abtauen von dieser Eisschicht befreit werden können. Zweckmäßigerweise ist die Reinigungseinrichtung 79 automatisch in vorgegebenen Zeitabständen für vorgegebene Zeitintervalle einschaltbar. Hier erfolgt dies dadurch, daß die Aneisungseinrichtung 103 unter dem Einfluß einer Schaltuhr 105 in vorgegebenen Zeitabständen, z. B. alle 6 Stunden, derart in die Steuerung des in der Saugleitung 65 liegenden Ventils 67 eingreift, daß für eine vorgegebene erste Zeitspanne, z. B. 10 Minuten, die Kühlleistung des Kälteaggregats 39 erhöht wird und sich eine Eisschicht auf den Verdampferplatten bildet, und in einer darauf folgenden zweiten Zeitspanne, z. B. 10 Minuten, die Kühlleistung unter den Normalwert erniedrigt oder auf Null herabgesetzt wird, so daß die Eisschichten wieder abschmelzen und von dem Wasserstrom 11 aufgelöst werden. Die Erfahrung hat gezeigt, daß auf diese Weise die Platten sehr wirksam gereinigt werden können. Der beschriebene automatische Betrieb der Reinigungseinrichtung 79 (hier in Form der Aneisungseinrichtung 103) erspart menschliche Arbeitskraft und macht eine Wartung der Wärmepumpe nur noch in großen Abständen oder sogar überhaupt nicht mehr erforderlich.

Es ist vorteilhaft, wenn die Reinigungseinrichtung 77 für die Abgabeöffnungen 73, hier in Form der Spritzeinrichtung 81, in Abhängigkeit von dem Betrieb der Reinigungseinrichtung 79 für die Verdampferplatten, hier in Form der Aneisungseinrichtung 103, schaltbar ist, weil dann die Reinigung der Abgabeöffnungen in Betriebsphasen gelegt werden kann, in denen die Wärmepumpe ohnehin nicht nutzbringend arbeitet. So ist es bei der dargestellten Ausführungsform ersichtlich vorteilhaft, die Spritzeinrichtung 81 während des Betriebes der Aneisungseinrichtung, insbesondere während der Abtauphase, zu betreiben, weil dann ohnehin die normale Arbeitsweise vorübergehend aufgehoben ist. Demgemäß können die beiden Schaltuhren 101 und 103 miteinander gekoppelt oder durch eine einzige Zeitschalteinrichtung ersetzt sein.

Damit der angestrebte Betrieb sehr nahe am Gefrierpunkt des Wassers störungsfrei möglich ist, weisen die Verdampferplatten 1, 3, 5, 7 innen und außen Mittel zum gleichmäßigen Verteilen des Kältemittels bzw. des Wasserfilms auf. Von den zahlreichen Möglichkeiten für die Gestaltung solcher Verteilungsmittel sind vor allem diejenigen von Interesse, die mit geringstem baulichem Aufwand zu verwirklichen sind und den Wärmeaustausch möglichst wenig behindern. Es ist bekannt, daß man in dieser Hinsicht günstige Ergebnisse mit einer Verdampferplatte erhalten kann, die wie üblich aus zwei mit gegenseitigem Abstand angeordneten und an ihren Rändern gegeneinander abgedichteten Blechplatten besteht und Verteilungsmittel in Form von kurzen Schweißnähten aufweist, die über die gesamte Plattenfläche mit gegenseitigen Abständen verteilt sind und die beiden Blechplatten stellenweise miteinander verbinden. Auf diese Weise erhält man innen eine Zerklüftung des Strömungsweges für das Kältemittel und außen ein gleichmäßiges Muster von Unebenheiten, und dadurch wird in sehr einfacher Weise eine gleichmäßige Verteilung sowohl des Kältemittelstromes im Inneren der Platte als auch des Wasserfilmes auf der Außenseite der Verdampferplatte erzielt. Bei der dargestellten Ausführungsform sind ebenfalls Verteilmittel der eben beschriebenen Art vorhanden, jedoch in einer weiter verbesserten Form. Die Schweißnähte 107 verlaufen horizontal und haben eine Länge, die einen Bruchteil der Breite der Verdampferplatte beträgt. Durch die waagerechte Erstreckung der Schweißnähte ergibt sich eine besonders gute Verwirbelung des Kältemittels ohne eine übermäßig große Erhöhung des Strömungswiderstandes. Die Schweißnähte sind in waagerechten Reihen angeordnet, wobei benachbarte Reihen jeweils seitlich versetzt zueinander angeordnet sind. Dadurch ergibt sich ein gleichmäßiges Muster von Verteilmitteln über die gesamte Plattenfläche. Die seitliche Versetzung der benachbarten Reihen von Schweißnähten ist so gewählt, daß in benachbarten Reihen die Schweißnähte jeweils auf Lücke zueinander angeordnet sind. Es hat sich gezeigt, daß dadurch ein besonders niedriger Strömungswiderstand für das Kältemittel erzielt werden kann, bei gleichzeitiger Sicherstellung einer sehr gleichmäßigen Kühlwirkung über die gesamte Fläche der Verdampferplatte.

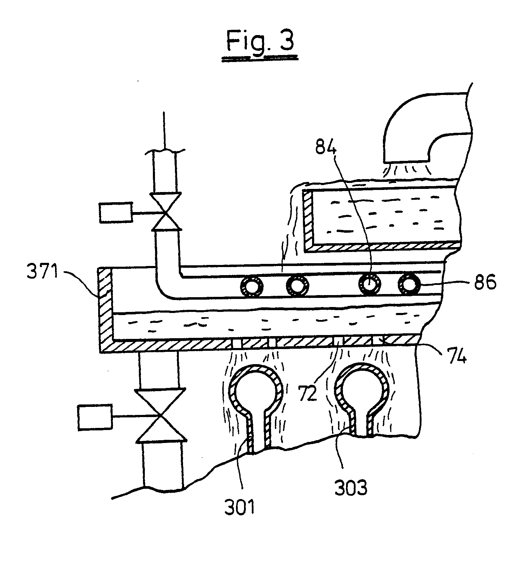

Fig. 3 zeigt eine abgewandelte Ausführungsform. Teile, die Teilen der Fig. 1 und 2 entsprechen, sind mit den gleichen Bezugszeichen wie dort bezeichnet, jedoch um 300 erhöht.

Bei der Ausführungsform nach Fig. 3 hat die Rieselwanne 371 zwei Reihen von Abgabeöffnungen pro Verdampferplatte, so für die Verdampferplatte 303 Reihen von Abgabeöffnungen 72, 74, und zwar je eine Reihe für beide Seiten der Verdampferplatte. Bei dieser Ausführungsform ist der bauliche Aufwand etwas höher als bei der Ausführungsform nach den Fig. 1 und 2, bei der für jede Verdampferplatte nur eine einzige Reihe von Abgabeöffnungen 73 vorgesehen ist, doch ergibt sich der Vorteil, daß die gleichmäßige Aufteilung des für eine Platte vorgesehenen Wasserteilstromes auf beide Seiten der Platte weniger von der genauen Positionierung der Platte relativ zu den Abgabeöffnungen abhängt. Im allgemeinen wird es auch bei der Ausführungsform nach Fig. 3 genügen, wenn die Spritzeinrichtung wie bei der Ausführungsform nach den Fig. 1 und 2 nur eine Druckwasserleitung (eine Reihe von Spritzöffnungen) pro Verdampferplatte aufweist, weil das aus den Spritzöffnungen austretende Wasser einen genügend großen Austrittskegel bestreicht, um beide zu der betreffenden Verdampferplatte gehörige Reihen von Ablauföffnungen genügend intensiv zu reinigen. Man kann aber auch, wie in Fig. 3 dargestellt, die Anzahl der Druckwasserleitungen entsprechend der Anzahl der Reihen von Ablauföffnungen verdoppeln. So sind gemäß Fig. 3 für die Reihen der Ablauföffnungen 72 und 74 zwei Druckwasserleitungen 84 und 68 mit darin vorgesehenen Spritzöffnungen vorhanden ; die Spritzrichtungen sind in Fig. 3 wieder durch Pfeile angedeutet. Die Reinigungswirkung einer derartigen Spritzeinrichtung ist besonders intensiv.

**Patentansprüche**

1. Wärmepumpe zum Entnehmen von Wärme aus Oberflächenwasser, mit wenigstens einem von einem Kältemittel durchströmbaren Verdampfer, einer Aufgabeeinrichtung (9) zum Aufgeben eines von einer Wasser-Fördereinrichtung (17) gelieferten Stromes (11) des Wassers von oben auf den Verdampfer zwecks Wärmeaustausch zwischen dem Verdampfer und dem an ihm herunterlaufenden Wasser, einer Wasser-Ableiteinrichtung (23) zum Ableiten heruntergelaufenen Wassers, einem Kältemittelkreislauf zum Überführen von Wärme aus dem herunterlaufenden Wasser zu einem Verbraucher (43) von im Vergleich zu dem Wasser erhöhter Temperatur, und einer Regeleinrichtung mit einem den Betriebszustand erfassenden Temperaturfühler (69), dadurch gekennzeichnet, daß zur Bildung eines gleichmäßigen Wasserfilms (13, 15) der Verdampfer aus einer Anzahl von aufrechtstehenden Verdampferplatten (3) besteht, die Wasser-Aufgabeeinrichtung (9) eine oberhalb der Verdampferplatten (3) angeordnete Rieselwanne (71) mit mehreren zur gleichmäßigen Beaufschlagung der Verdampferplatten (3) bemessenen und verteilten Abgabeöffnungen (73) aufweist, die Verdampferplatten (3) Verteilungsmittel zum gleichmäßigen Verteilten des inneren Kältemittelstromes und des äußeren Wasserfilms aufweisen, daß bei Dauerbetrieb zur Vermeidung einer Eisbildung an den Verdampferplatten die Regeleinrichtung von dem Temperaturfühler (69) auf die Einhaltung einer dicht über dem Gefrierpunkt liegenden Temperatur des Wasserfilms steuerbar ist, und daß eine Reinigungseinrichtung (79) für die Oberflächen der Verdampferplatten (3) vorgesehen ist, die eine wahlweise betätigbare Aneisungseinrichtung (103) zum vorübergehenden Aneisen und anschließenden Abtauen der Verdampferplatten (3) aufweist.

2. Wärmepumpe nach Anspruch 1, bei der die Verdampferplatte (3) zwei mit Abstand voneinander angeordnete Blechplatten aufweist, die an ihren Rändern gegeneinander abgedichtet sind, und die Verteilungsmittel durch kurze Schweißnähte zwischen den Blechplatten gebildet sind, dadurch gekennzeichnet, daß die kurzen Schweißnähte (107) horizontal verlaufen und eine Länge haben, die einen Bruchteil der Breite der Verdampferplatte (3) beträgt.

3. Wärmepumpe nach Anspruch 2, dadurch gekennzeichnet, daß die Schweißnähte (107) in waagerechten Reihen mit gegenseitigem Versatz in benachbarten Reihen angeordnet sind.

4. Wärmepumpe nach Anspruch 3, dadurch gekennzeichnet, daß die Schweißnähte benachbarter Reihen auf Lücke zueinander angeordnet sind.

5. Wärmepumpe nach einem der vorhergehenden Ansprüche, dadurch gekennzeichnet, daß die Reinigungseinrichtung (79) für die Verdampferplatten (3) automatisch in vorgegebenen Zeitabständen für vorgegebene Zeitintervalle einschaltbar ist.

6. Wärmepumpe nach einem der vorhergehenden Ansprüche, dadurch gekennzeichnet, daß eine wahlweise betätigbare Reinigungseinrichtung (77) für die Abgabeöffnungen (73) der Rieselwanne (71) vorgesehen ist.

7. Wärmepumpe nach Anspruch 6, dadurch gekennzeichnet, daß die Reinigungseinrichtung (77) für die Abgabeöffnungen (73) eine wahlweise betätigbare Spritzeinrichtung (81) aufweist.

8. Wärmepumpe nach Anspruch 7, dadurch gekennzeichnet, daß die Spritzeinrichtung (81) eine an eine Druckwasserquelle (97) angeschlossene Druckwasserleitung (85) und darin vorgesehene, auf die Abgabeöffnungen (73) ausgerichtete Spritzöffnungen (91) aufweist.

9. Wärmepumpe nach Anspruch 7 oder 8, dadurch gekennzeichnet, daß an der Rieselwanne (71) ein im Betrieb der Spritzeinrichtung (81) zu öffnender Spritzwasser-Ablauf (93) vorgesehen ist.

10. Wärmepumpe nach den Ansprüchen 8 und 9, dadurch gekennzeichnet, daß Spritzöffnungen (91) mit schräg zu dem Spritzwasser-Ablauf (93) hinweisenden Spritzeinrichtungen vorgesehen sind.

11. Wärmepumpe nach einem der Ansprüche 6 bis 10, dadurch gekennzeichnet, daß die Reinigungseinrichtung (77) für die Abgabeöffnungen (73) automatisch in vorgegebenen Zeitabständen für vorgegebene Zeitintervalle betätigbar ist.

12. Wärmepumpe nach den Ansprüchen 5 und 11, dadurch gekennzeichnet, daß die Reinigungseinrichtung (77) für die Abgabeöffnungen (73) in Abhängigkeit von dem Betrieb der Reinigungseinrichtung (79) für die Verdampferplatten (3) schaltbar ist.

13. Wärmepumpe nach den Ansprüchen 1 und 12, dadurch gekennzeichnet, daß die Spritzeinrichtung (81) während des Betriebes der Aneisungseinrichtung (79) einschaltbar ist.

14. Wärmepumpe nach einem der vorhergehenden Ansprüche, dadurch gekennzeichnet, daß die Rieselwanne (371) zwei Reihen von Abgabeöffnungen (72, 74) pro Verdampferplatte (303) aufweist, und zwar je eine Reihe für beide Seiten der Verdampferplatte (303).

15. Wärmepumpe nach einem der vorhergehenden Ansprüche, dadurch gekennzeichnet, daß die Rieselwanne (71 ; 371) leicht auswechselbar angeordnet und gegen wenigstens eine andere Rieselwanne mit anderen Größen der Ablauföffnungen austauschbar ist.

16. Wärmepumpe nach einem der vorhergehenden Ansprüche, dadurch gekennzeichnet, daß die Wasser-Fördereinrichtung (17) eine konstante Förderleistung hat.

17. Wärmepumpe nach einem der vorhergehenden Ansprüche, dadurch gekennzeichnet, daß oberhalb der Rieselwanne (71) eine Beruhigungsrinne (75) angeordnet ist, in die der Wasserstrom (11) eingeleitet wird und aus der die Rieselwanne (71) gespeist wird.

18. Wärmepumpe nach Anspruch 17, dadurch gekennzeichnet, daß die Rieselwanne (71) aus der Beruhigungsrinne (75) durch Überlauf gespeist wird.

19. Wärmepumpe nach einem der vorhergehenden Ansprüche, dadurch gekennzeichnet, daß der Temperaturfühler (69) in dem von den Verdampferplatten (3) ablaufenden Wasser angeordnet ist.

**Claims**

1. A heat pump for drawing heat from surface water, comprising at least one evaporator adapted to have a refrigerant flow therethrough, a charging device (9) for charging a stream (11) of water supplied from a water discharge means (17) onto the evaporator from above for heat exchange between the evaporator and the water flowing downward thereat, a water draining means (23) for draining the water flown downward, a refrigerant circuit for transferring heat from the water flowing downward to a consumer (43) having an elevated temperature in comparison with the water, and a regulating means comprising a temperature sensor (69) sensing the operational condition, characterized in that for the formation of a uniform film of water (13, 15) the evaporator consists of a plurality of upright evaporator plates (3), the water charging device (9) comprises a rinsing tub (71) arranged above the evaporator plates (3) which is provided with several discharge openings (73) dimensioned and distributed to obtain a uniform bias of the evaporator plates (3), the evaporator plates (3) comprise distributing means for the uniform distribution of the interior flow of refrigerant and the exterior film of water, that the regulating means is adapted to be controlled by the temperature sensor (69) to maintain a temperature of the water film closely above the freezing point, and that to avoid the formation of ice at the evaporator plates in permanent operation a cleaning device (79) is provided for the surfaces of the evaporator plates (3) which comprises a selectively actuable icing means (79) for the temporary formation of ice at the evaporator plates (3) and subsequent thawing.

2. A heat pump according to claim 1, in which the evaporator plate (3) comprises two sheet metal plates arranged at a distance from each other and which are sealed against each other at the edges thereof and the distributor means are formed by short welded seams between the sheet metal plates, characterized in that the short welded seams (107) are extending horizontally and have a length equal to a fracture of the width of the evaporator plate (3).

3. A heat pump according to claim 2, characterized in that the welded seams (107) are arranged in horizontal rows with adjacent rows being mutually offset.

4. A heat pump according to claim 3, characterized in that the welded seams of adjacent rows are arranged respectively to border each other's gaps.

5. A heat pump according to any one of the preceding claims, characterized in that the cleaning device (79) for the evaporator paltes (3) is adapted to be switched on automatically for predetermined time intervals at predetermined time intervals.

6. A heat pump according to any one of the preceding claims, characterized in that a selectively operable cleaning device (77) is provided for the discharge openings (73) of the rinsing tub (71).

7. A heat pump according to claim 6, characterized in that the cleaning device (77) for the discharge openings (73) comprises a selectively actuable injection means (81).

8. A heat pump according to claim 7, characterized in that the injection means (81) comprises a pressure water line (85) connected to a source of pressure water (97) and injection openings (91) provided therein which are aligned with the discharge openings (73).

9. A heat pump according to claim 7 or 8, characterized in that an injection water drain (93) is provided at the rinsing tub (71) which is adapted to be opened during operation of the injection means (81).

10. A heat pump according to the claims 8 and 9, characterized in that injection openings (91) are provided which comprise injection means pointing obliquely towards the injection water drain (93).

11. A heat pump according to any one of the claims 6 to 10, characterized in that the cleaning device (77) for the discharge openings (73) is adapted to be actuated automatically for predetermined time intervals at predetermined time intervals.

12. A heat pump according to the claims 5 and 11, characterized in that the cleaning device (77) for the discharge openings (73) is adapted to be switched in dependence upon the operation of the cleaning device (79) for the evaporator plates (3).

13. A heat pump according to claims 1 and 12, characterized in that the injection means (81) is adapted to be switched on during operation of the icing means (79).

14. A heat pump according to any one of the preceding claims, characterized in that the rinsing tub (371) comprises two rows of discharge openings (72, 74) for each evaporator plate (303), namely, one row each for both sides of the evaporator plate (303).

15. A heat pump according to any one of the preceding claims, characterized in that the rinsing tub (71 ; 371) is arranged for easy replacement and is to be replaced by at least one other rinsing tub with different sizes of the drain openings.

16. A heat pump according to any one of the preceding claims, characterized in that the water discharge means (17) has a constant rate of discharge.

17. A heat pump according to any one of the preceding claims, characterized in that a calming channel (75) is arranged above the rinsing tub (71) into which the water stream (11) is introduced and from which the rinsing tub (71) is fed.

18. A heat pump according to claim 17, characterized in that the rinsing tub (71) is fed by overflow from the calming channel (75).

19. A heat pump according to any one of the preceding claims, characterized in that the temperature sensor (69) is arranged in the water draining from the evaporator plates (3).

**Revendications**

1. Une pompe de chaleur pour tirer de la chaleur de l'eau des surfaces, comportant au moins un évaporateur à travers lequel peut courir un agent frigorifique, un dispositif de charger (9) pour charger sur l'évaporateur de haut un flot d'eau qui est livré d'un dispositif à transporter de l'eau (17) pour l'échange de chaleur entre l'évaporateur et l'eau coulant de haut en bas sur lui, un dispositif (23) de détourner l'eau coulée en bas, un circuit d'agent frigorifique pour transférer de la chaleur de l'eau coulant en bas à un consommateur (43) ayant une température élevée en comparaison de l'eau, et un dispositif à régler comportant une antenne (69) de température établissant la condition d'opération, caractérisée en ce que pour la formation d'un film uniforme de l'eau (13, 15) l'évaporateur consiste en une pluralité de plaques d'évaporateur (3) verticales, le dispositif pour charger de l'eau (9) comprend une cuve d'irrigation (71) disposée au-dessus des plaques d'évaporateur (3) et comportant plusieurs ouvertures (73) de décharge distribuées et dimensionnées pour le biais uniforme des plaques d'évaporateur (3), les plaques d'évaporateur (3) comprennent des moyens de distribution pour la distribution uniforme du flot de l'agent frigorifique intérieur et le film d'eau extérieur ; que le dispositif à régler peut être contrôlé par l'antenne (69) de température pour maintenir une température du film d'eau peu au-dessus du point de congélation ; et que pour éviter une formation de glace sur les plaques d'évaporateur en opération permanente il est pourvu d'un dispositif (79) de nettoyage pour les surfaces des plaques d'évaporateur (3), comportant un dispositif (79) à formation de glace actionnable sélectivement pour temporairement former de la glace sur les plaques d'évaporateur (3) et après les dégeler.

2. Pompe de chaleur selon revendication 1, dont la plaque d'évaporateur (3) comprend deux plaques sous forme de tôle de métal disposées à distance l'une de l'autre et qui sont rendues étanches l'une envers l'autre sur leurs bords, et les moyens de distribution sont formés par des soudures courtes entre les plaques en tôle de métal, caractérisée en ce que les soudures courtes (107) s'étendent horizontalement et sont d'une longueur égale à une fraction de la largeur de la plaque d'évaporateur (3).

3. Pompe de chaleur selon revendication 2, caractérisée en ce que les soudures (107) sont disposées dans des files horizontales avec un décalage mutuel dans des files voisines.

4. Pompe de chaleur selon revendication 3, caractérisée en ce que les soudures des files voisines sont disposées dans une manière telle que les soudures d'une file touchent les lacunes de l'autre.

5. Pompe de chaleur selon l'une des revendications précédentes, caractérisée en ce que le dispositif de nettoyage (79) pour les plaques d'évaporateur (3) peut être mis en circuit automatiquement à des intervalles prédéterminés pour des intervalles prédéterminés.

6. Pompe de chaleur selon une des revendications précédentes, caractérisée en ce qu'il est pourvu un dispositif de nettoyage (77) actionnable sélectivement pour les ouvertures de décharge (73) de la cuve d'irrigation (71).

7. Pompe de chaleur selon revendication 6, caractérisée en ce que le dispositif de nettoyage (77) pour les ouvertures de décharge (73) comporte un dispositif d'injection (81) sélectivement actionnable.

8. Pompe de chaleur selon revendication 7, caractérisée en ce que le dispositif d'injection (81) comporte une conduite de l'eau sous pression (85) connectée à une source de l'eau sous pression (97) et comprend, dedans pourvues, des ouvertures d'injection (91) alignées sur les ouvertures de décharge (73).

9. Pompe de chaleur selon les revendications 7 et 8, caractérisée en ce qu'un moyen d'écoulement pour l'eau d'injection (93) est pourvu près de la cuve d'irrigation (71), qui peut être ouvert pendant l'opération du dispositif d'injection (81).

10. Pompe de chaleur selon les revendications 8 et 9, caractérisée en ce qu'il est pourvu des ouvertures d'injection (91) comportant des moyens d'injection se dirigeant obliquement vers l'écoulement (93) d'eau d'injection.

11. Pompe de chaleur selon l'une des revendications 6 à 10, caractérisée en ce que le dispositif de nettoyage (77) pour les ouvertures de décharge (73) est actionnable automatiquement à des intervalles prédéterminés pour des intervalles prédéterminés.

12. Pompe de chaleur selon les revendications 5 à 12, caractérisée en ce que le dispositif de nettoyage (77) pour les ouvertures de décharge (73) peut être mis en circuit en dépendance de l'opération du dispositif de nettoyage (79) pour les plaques d'évaporateur (3).

13. Pompe de chaleur selon les revendications 1 à 12, caractérisée en ce que le dispositif d'injection (81) peut être mis en circuit pendant l'opération du dispositif (79) de formation de glace.

14. Pompe de chaleur selon une des revendications précédentes, caractérisée en ce que la cuve d'irrigation (371) comporte deux files des ouvertures de décharge (72, 74) pour chaque plaque d'évaporateur (303), à savoir, une file pour chacun des deux côtés de la plaque (303) d'évaporateur.

15. Pompe de chaleur selon une des revendications précédentes, caractérisée en ce que la cuve d'irrigation (71 ; 371) est disposée d'une manière à être remplacée facilement et peut être remplacée au moins contre une autre cuve d'irrigation dont les ouvertures de décharge sont des dimensions différentes.

16. Pompe de chaleur selon une des revendications précédentes, caractérisée en ce que le dispositif (17) pour transporter l'eau a un débit de décharge constant.

17. Pompe de chaleur selon une des revendications précédentes, caractérisée en ce qu'un caniveau à calmer (75) est disposé au-dessus de la cuve d'irrigation (71), dans lequel le flot d'eau (11) est conduit, et d'où la cuve d'irrigation (71) est alimentée.

18. Pompe de chaleur selon revendication 17, caractérisée en ce que la cuve d'irrigation (71) est alimentée du caniveau à calmer (75) par un moyen de débordement.

19. Pompe de chaleur selon une des revendications précédentes, caractérisée en ce que l'antenne de température (69) est disposée dans l'eau écoulant des plaques d'évaporateur (3).

Fig. 1

Fig. 2

# Fig. 3